# EUROPÄISCHE PATENTSCHRIFT

(11) **EP 1 744 108 B1**
(45) Veröffentlichungstag und Bekanntmachung des Hinweises auf die Patenterteilung: **19.01.2011**
(21) Anmeldenummer: 06013412.9
(22) Anmeldetag: 29.06.2006
(51) Int. Cl.: F25B 9/00, F25B 45/00, F25B 40/00

(54) **Anordnung in einem Kältekreislauf**
Arrangement in a refrigeration cycle
Arrangement dans un cycle frigorifique

(30) Priorität: 15.07.2005 DE 102005033019
(43) Veröffentlichungstag der Anmeldung: 17.01.2007
(73) Patentinhaber: Modine Manufacturing Company, Racine, Wisconsin 53403-2552 (US)
(72) Erfinder: Vetter, Frank, Dr., 73765 Neuhausen (DE)
(74) Vertreter: Wolter, Klaus-Dietrich

(56) Entgegenhaltungen:
- EP-A- 1 151 878
- WO-A-2004/051162
- DE-B3- 10 317 551
- JP-A- 2002 195 705
- JP-A- 2004 028 525
- US-A1- 2004 261 449
- US-A1- 2005 044 865

## Beschreibung

Die Erfindung betrifft einen Klimatisierungskreislauf mit einem transkritischen Kältemittel enthaltend: Kompressor, Gaskühler, Verdampfer, Expansionsorgan, Akkumulator und internen Wärmetauscher, zum Wärmeaustausch zwischen einer Hochdruckseite und einer Niederdruckseite.

Eine solcher Klimatisierungskreislauf wurde kürzlich beim Deutschen Patent - und Markenamt angemeldet und veriztfentlicht als DE 10 2005 021 787 erhalten. In der genannten Anmeldung wurde hauptsächlich ein interner Wärmetauscher beschrieben, der eine Akkumulatorfunktion besitzt. Der Akkumulator scheidet aus dem Verdampfer kommendes flüssiges Kältemittel ab, speichert es und sorgt somit dafür, dass dem Kompressor ausschließlich gasförmiges Kältemittel zugeführt wird, um dessen Funktion zu gewährleisten. Bei Verwendung eines internen Wärmetauschers (IWT) sorgt der Akkumulator darüber hinaus dafür, dass das dem Niederdruckteil des internen Wärmetauschers zugeleitete Kältemittel entweder gasförmig ist oder ein Zweiphasengemisch mit hohem Dampfanteil ist, um einen hohen Wirkungsgrad der Kälteanlage sicherzustellen. Restliches flüssiges Kältemittel setzt sich im Akkumulator ab und bildet einen Puffer, um den unterschiedlichen Kältemittelbedarf des Kreislaufes bei unterschiedlichen Betriebsbedingungen abzudecken, und um vor allem den Verlust von Kältemittel durch Leckagen über eine längere Betriebszeit der Klimaanlage auszugleichen. Für Klimaanlagen, die ohne thermisch geregelte Expansionsorgane arbeiten, ist ein solcher Flüssigkeitsabscheider auf der Niederdruckseite für die genannten Zwecke ausreichend. Speziell für transkritische Kältekreise muss zur Aufnahme des Kältemittels (CO₂) bei hohen Umgebungstemperaturen ein wesentlich größeres Speichergefäß vorgesehen werden als zur Flüssigkeitsspeicherung notwendig ist. Somit erfüllt das Speichergefäß die Funktion eines überkritischen Gasspeichers im abgeschalteten Zustand und eines Flüssigkeitsspeichers bzw. - abscheiders im Betrieb der Anlage.

Die Automobilhersteller fordern die Möglichkeit ein, wegen der weltweit unterschiedlichen Umweltschutzvorschriften, Automobile für den einen Markt mit herkömmlichen Klimaanlagen auszustatten, die Fluorchlorkohlenwasserstoffe als Kältemittel verwenden und für einen anderen Markt mit CO₂-Klimaanlagen. Dabei sollen die Raumkonzepte innerhalb einer Baureihe von Automobilen möglichst unverändert beibehalten werden können, sie sollten schon gar nicht wegen einer anderen Klimaanlage verändert werden müssen. Bei den heute am Markt üblichen Klimaanlagen mit thermischem Expansionsorgan werden so genannte Receiver eingesetzt, also Flüssigkeitsspeicher, die baulich in den Kondensator mit Unterkühlstrecke integriert sind. Diese Receiver sind meist lang gestreckte zylindrische Gefäße.

Die deutsche Patentanmeldung mit dem Aktenzeichen DE 10 2005 021 464.9 beschreibt einen internen Wärmetauscher. Der aus der JP-2002-195705 bekannte Klimatisierungskreislauf entspricht dem Oberbegriff des Anspruchs 1. Auf der Niederdruckseite wurde dort zwischen dem Verdampfer und dem internen Wärmetauscher ein Akkumulator angeordnet und direkt in den Klimatisierungskreislauf eingebunden. Ein zusätzlicher Kältemittelspeicher wurde auf der Niederdruckseite indirekt, über Ventile und Sensoren, angeschlossen, der auch mit der Hochdruckseite des Kreislaufes in indirekter Verbindung steht. Wenn dem Kreislauf Kältemittel zugeführt werden muss, werden die Ventile geöffnet und danach wieder geschlossen. Der bauliche und räumliche Aufwand für diese Regelung ist beachtlich.

In der WO 04/051162A1 wurde ein Akkumulator auf der Hochdruckseite angeordnet und ein Gasspeicher indirekt an die Niederdruckseite angeschlossen. Die JP 2004 028 525A besitzt einen Akkumulator, der mit einem inneren Wärmetauscher zusammengefasst wurde. In der DE 103 17 551B3 wurde ein Akkumulator auf der Niederdruckseite angeordnet und ein Kältemittelvolumen auf der Hochdruckseite vorgesehen, um eine stabile Regelung im Heizbetrieb zu erreichen.

Im EP 860 309A2 wurden ein Flüssigkeit / Gas - Separator und ein Speichertank auf der Niederdruckseite des Kreislaufs vorgesehen. Ein interner Wärmetauscher ist dort nicht vorhanden.

Die Aufgabe der Erfindung besteht darin, einen Klimatisierungskreislauf mit transkritischem Kältemittel vorzuschlagen, der sich durch einen geringeren Bauraum und durch geringeren Aufwand auszeichnet. Die erfindungsgemäße Lösung ergibt sich bei dem Klimatisierungskreislauf gemäß Oberbegriff des Anspruchs 1 durch die Merkmale in dessen kennzeichnendem Teil. Weil der Gasspeicher in den Klimatisierungskreislauf auf der Niederdruckseite eingebunden und im Gaskühler integriert ist, werden im Vergleich zum Stand der Technik der Aufwand und der Bauraum reduziert.

Auf der Niederdruckseite zwischen dem Verdampfer und dem internen Wärmetauscher ist ein Akkumulator angeordnet und ferner ist ein Gasspeicher auf der Niederdruckseite vorgesehen der sich zwischen dem internen Wärmetauscher und der Saugseite des Kompressors befindet.

Dazu wird das Akkumulatorgefäß in zwei kleinere Gefäße, eines mit den Akkumulatoreigenschaften (Fassungsvermögen etwa 200 - 400 ml), das andere (Fassungsvermögen etwa 200 - 350ml) ausschließlich mit der Funktion der Gasspeicherung, unterteilt. Der Gasspeicher hat eine für die Platzierung im Bauraum günstige äußere Gestalt und er kann auch an beliebiger Stelle im Fahrzeug, etwa am Gaskühler, integriert werden.

Der Gasspeicher kann mittels einer Stichleitung, an der Leitung zwischen dem internen Wärmetauscher und der Saugseite des Kompressors angeordnet sein.

Die Erfindung wird in einem Ausführungsbeispiel anhand der beigefügten Abbildungen beschrieben.

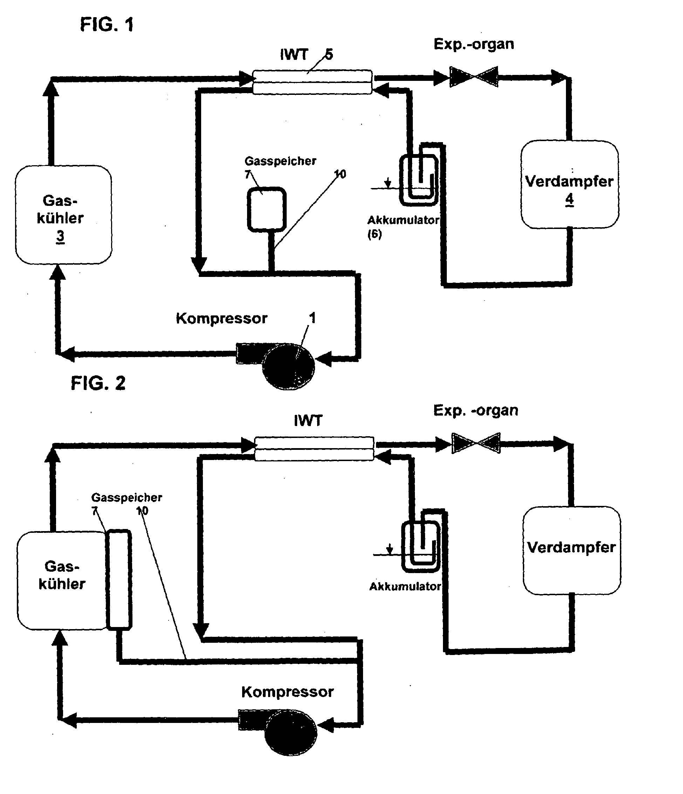

Die Fig.2 zeigt ein Ausführungsbeispiel der Erfindung.

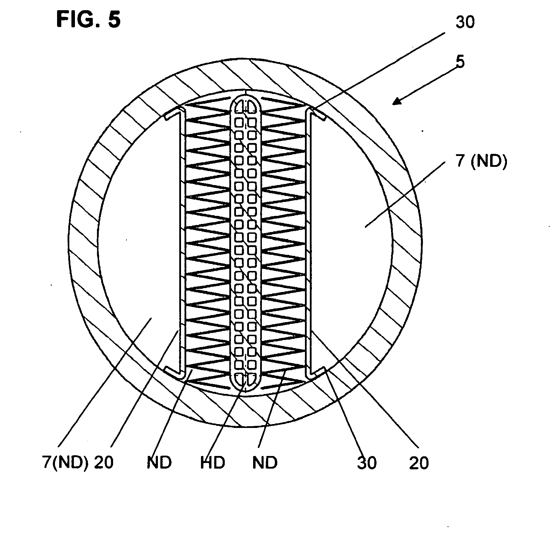

Die Fig. 1 sowie 3 - 5 zeigen Ausbildungen, die nicht zur Erfindung gehören. Die Fig. 5 zeigt den Querschnitt durch einen Gasspeicher, der als interner Wärmetauscher wirksam ist.

In den Fig. 1 bis 4 besteht ein Klimatisierungskreislauf mit einem transkritischen Kältemittel, insbesondere in einem Kraftfahrzeug, aus einem Kompressor **1,** einem Gaskühler **3,** einem Verdampfer **4,** einem Expansionsorgan und einem internen Wärmetauscher **5,** zum Wärmeaustausch zwischen einer Hochdruckseite **HD** und einer Niederdruckseite **ND,** wobei auf der Niederdruckseite zwischen dem Verdampfer **4** und dem internen Wärmetauscher **5** ein Akkumulator **6** angeordnet ist. Der bis hierher beschriebene klimatisierungskreislauf, entspricht an und für sich zunächst dem Stand der Technik. Der erste Unterschied zum Stand der Technik besteht im Fassungsvermögen des Akkumulators **6.** In einem praktischen Anwendungsfall aus dem Stand der Technik, in dem sich die Klimaanlage in einem PKW befindet, beträgt das Fassungsvermögen, und damit verbunden der Raumbedarf des Akkumulators, etwa 500 - 800 ml. Das Fassungsvermögen des in den Fig. 1 bis 4 gezeigten Akkumulators **6** ist auf etwa 200 -400 ml reduziert worden, was zu einer wesentlichen Platzersparnis geführt hat. Der Gasspeicher **7** wurde im Fall der Fig. **1** mittels einer Stichleitung **10** an die Leitung zwischen dem internen Wärmetauscher **5** und der Saugseite des Kompressors **1** angesetzt. Dessen Fassungsvermögen liegt in diesem Ausführungsbeispiel bei etwa 200 - 350 ml. Diese Menge ist ausreichend, um den Verlust an Kältemittel über den geforderten Zeitraum ausgleichen zu können. Die sich einstellende Platzersparnis geht in erster Linie darauf zurück, dass beide nunmehr relativ kleinen Behälter individuell in vorhandenen Nischen angeordnet werden können.

Im Ausführungsbeispiel gemäß Fig. 2 wurde ebenfalls eine Stichleitung **10** vorgesehen, um den Gasspeicher **7** auf der Niederdruckseite **ND** einzubinden. Im Unterschied zur Fig. 1 wurde der Gasspeicher **7** in der Fig. 2 erfindungsgemäß mit dem Gaskühler **3** vereinigt. Der Gasspeicher **7** kann sich in diesem Fall als schlankes Rohr parallel zu einem der Sammelrohre des Gaskühlers **3** erstrecken. (nicht gezeigt)

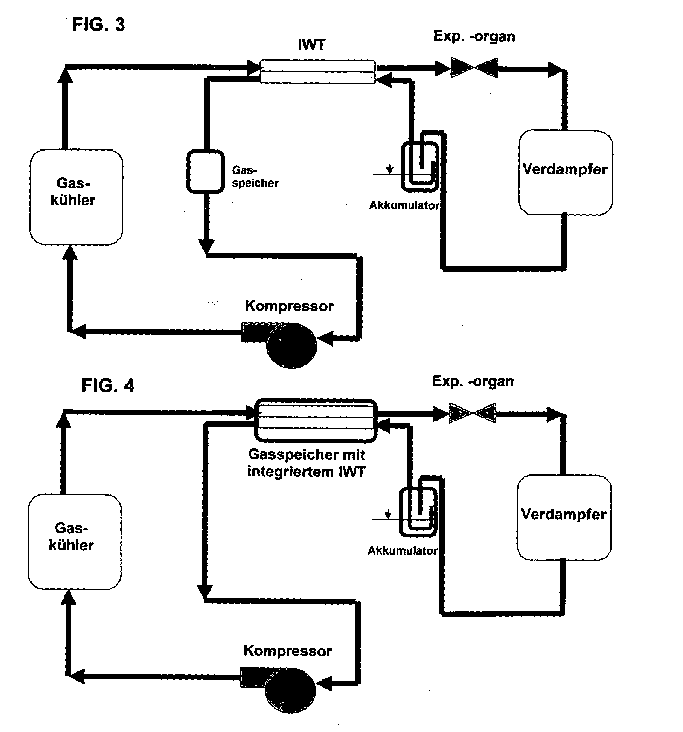

Im Fall gemäß Fig. 3 wird der Gasspeicher **7** vom gesamten gasförmigen Kältemittel durchströmt. Er kann sozusagen als eine partielle Leitungsverdickung ausgebildet sein. Im Fall der Fig. 4 wurde der Gasspeicher **7** mit dem internen Wärmetauscher 5 vereinigt.

Die Fig. 5 zeigt einen Querschnitt durch einen den Gasspeicher **7** aufweisenden internen Wärmetauscher **5**. Er besteht aus einem langen, schlanken, runden und deshalb druckstabilen Rohr. Die Hochdruckseite **HD** strömt durch ein zentral im Rohr angeordnetes, flaches Mehrkammerrohr. Die Niederdruckseite **ND** strömt durch einen beidseitig des flachen Mehrkammerrohres abgeteilten Strömungsweg, der mit einem Inneneinsatz ausgefüllt ist. Zur Abtrennung des Niederdruck-Strömungsweges innerhalb des Rohres wurden zwei dünne Längs -Trennwände **20** in das Rohr eingesetzt, die abgekantete Längsränder **30** aufweisen, mit denen sie geschickt an der Innenwand des Rohres mittels Löten zu verbinden sind. Wie aus der Fig. 5 zu sehen ist, verbleibt der restliche Querschnitt, etwa die Hälfte des gesamten Rohrquerschnitts, für die Nutzung als Gasspeicher **7.** Selbstverständlich sind in den Längs-Trennwänden **20** entsprechende Öffnungen (nicht gezeigt) vorhanden, um die Verbindung zwischen dem Niederdruck-Strömungsweg und dem Niederdruck-Gasspeicher **7** herzustellen. Der im internen Wärmetauscher **5** integrierte Gasspeicher **7** hat ferner eine nicht gezeigte Verbindung zur Saugseite des Kompressors **1.** Diese als vorteilhafte Löt-Konstruktion ausgeführte Vorrichtung zeichnet sich durch besondere Herstellungsfreundlichkeit aus, und sie ist in hohem Maße als interner Wärmetauscher **5** wirksam. Weitere Einzelheiten bezüglich der Löt-Konstruktion können der deutschen Patentanmeldung mit dem Aktenzeichen DE 10 2005 021 464.9 entnommen werden, die durch diesen Hinweis als hier vollständig dargelegt angesehen werden soll. Die erwähnte Patentanmeldung betrifft eine Vorrichtung zur Zwischenkühlung des Kältemittels. Die dort ausführlich beschriebene Vorrichtung wird bevorzugt im Zusammenhang mit dieser Anmeldung, wie vorstehend ausgeführt wurde, als Gasspeicher/interner Wärmetauscher eingesetzt.

## Patentansprüche

1. Klimatisierungskreislauf mit einem transkritischen Kältemittel, enthaltend: Kompressor (1), Gaskühler (3), Verdampfer (4), Expansionsorgan und internen Wärmetauscher (5) zum Wärmeaustausch zwischen einer Hochdruckseite und einer Niederdruckseite, wobei auf der Niederdruckseite zwischen dem Verdampfer (4) und dem internen Wärmetauscher (5) ein Akkumulator (6) angeordnet ist,
**dadurch gekennzeichnet, dass**
ein Gasspeicher (7) auf der Niederdruckseite (ND) angeordnet und mit dem Gaskühler (3) integriert ausgeführt ist.

2. Klimatisierungskreislauf nach Anspruch 1, **dadurch gekennzeichnet, dass** sich der Gasspeicher (7) zwischen dem internen Wärmetauscher (5) und der Saugseite des Kompressors (1) befindet.

3. Klimatisierungskreislauf nach Anspruch 1 und 2, **dadurch gekennzeichnet, dass** der Gasspeicher (7) mittels einer Stichleitung (10), an der Leitung zwischen dem internen Wärmetauscher (5) und dem Kompressor (1) angeordnet ist.

## Claims

1. Air-conditioning cycle with a transcritical refrigerant, containing: a compressor (1), gas cooler (3), evaporator (4), expansion member and internal heat exchanger (5) for heat exchange between a high-pressure side and a low-pressure side, an accumulator (6) being arranged on the low-pressure side between the evaporator (4) and the internal heat exchanger (5),
**characterized in that**
a gas store (7) is arranged on the low-pressure side (ND) and is designed to be integrated with the gas cooler (3).

2. Air-conditioning cycle according to Claim 1, **characterized in that** the gas store (7) is located between the internal heat exchanger (5) and the suction side of the compressor (1).

3. Air-conditioning cycle according to Claims 1 and 2, **characterized in that** the gas store (7) is arranged by means of a branch line (10) on the line between the internal heat exchanger (5) and the compressor (1).

## Revendications

1. Circuit de climatisation comprenant un fluide frigorigène transcritique, contenant : un compresseur (1), un refroidisseur à gaz (3), un évaporateur (4), un organe d'expansion et un échangeur de chaleur interne (5) pour l'échange de chaleur entre un côté haute pression et un côté basse pression, un accumulateur (6) étant disposé du côté basse pression entre l'évaporateur (4) et l'échangeur de chaleur interne (5),
**caractérisé en ce que**
l'on dispose sur le côté basse pression (ND) un accumulateur de gaz (7) qui est réalisé de manière intégrée au refroidisseur à gaz (3).

2. Circuit de climatisation selon la revendication 1, **caractérisé en ce que** l'accumulateur de gaz (7) se trouve entre l'échangeur de chaleur interne (5) et le côté d'aspiration du compresseur (1).

3. Circuit de climatisation selon les revendications 1 et 2, **caractérisé en ce que** l'accumulateur de gaz (7) est disposé au moyen d'une conduite de branchement (10) sur la conduite entre l'échangeur de chaleur interne (5) et le compresseur (1).
